(19) Europäisches Patentamt
European Patent Office
Office européen des brevets

(11) **EP 2 823 602 B1**

(12) **EUROPÄISCHE PATENTSCHRIFT**

(45) Veröffentlichungstag und Bekanntmachung des Hinweises auf die Patenterteilung:
**17.06.2015 Patentblatt 2015/25**

(21) Anmeldenummer: **13792615.0**

(22) Anmeldetag: **06.11.2013**

(51) Int Cl.:
*H04L 12/40* *(2006.01)*    *H04L 12/10* *(2006.01)*

(86) Internationale Anmeldenummer:
**PCT/EP2013/073150**

(87) Internationale Veröffentlichungsnummer:
**WO 2014/072333 (15.05.2014 Gazette 2014/20)**

(54) **BUSKOMMUNIKATIONSVORRICHTUNG**

BUS COMMUNICATION APPARATUS

DISPOSITIF DE COMMUNICATION PAR BUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 DE 102012110732**

(43) Veröffentlichungstag der Anmeldung:
**14.01.2015 Patentblatt 2015/03**

(73) Patentinhaber: **R. Stahl Schaltgeräte GmbH 74638 Waldenburg (DE)**

(72) Erfinder: **SEIFRIED, Michael 74523 Schwäbisch Hall (DE)**

(74) Vertreter: **Rüger, Barthelt & Abel Patentanwälte Webergasse 3 73728 Esslingen (DE)**

(56) Entgegenhaltungen:
**EP-A1- 2 073 435        WO-A1-2009/063213 WO-A1-2012/038472**

## Beschreibung

Die Erfindung betrifft eine Buskommunikationsvorrichtung. Die Buskommunikationsvorrichtung weist insbesondere mehrere an eine Busleitung angeschlossenen Teilnehmereinheiten auf, die miteinander nach einem vorgegebenen Kommunikationsprotokoll kommunizieren. Die Busleitung weist insbesondere nur 2 Adern auf. Über die Busleitung wird sowohl die Datenübertragung nach dem Kommunikationsprotokoll durchgeführt, als auch die an die Busleitung angeschlossenen Teilnehmereinheiten mit elektrischer Energie versorgt. Ein Kommunikationssteuergerät dient zur Steuerung der Kommunikation nach dem Kommunikationsprotokoll.

Eine Buskommunikationsvorrichtung ist beispielsweise aus DE 10 2010 037 262 A1 bekannt. Die Buskommunikationsvorrichtung weist eine integrierte Bussteuerungs- und Energieversorgungseinrichtung auf. Dadurch können auf einer gemeinsamen Busleitung sowohl elektrische Energie in Form von Gleichstrom, als auch digitale Signale übertragen werden. Es handelt sich um ein Feldbussystem.

Das gleichzeitige Übertragen von Datensignalen über Energieversorgungsleitungen ist auch bei LAN-Netzwerken bekannt, beispielsweise in Haushalten über sogenannte Power-Line-Adapter.

WO 2009/063213 A1 beschreibt eine Kommunikationsvorrichtung mit einer Busleitung, an die ein Kommunikationssteuergerät oder Leitrechner und mittels einer Kopplungseinrichtung wenigstens eine Teilnehmereinheit angeschlossen ist. Mit der Busleitung ist außerdem ein Busdiagnoseeinheit verbunden. Die Kopplungseinrichtung ist mit einer angeschlossenen Teilnehmereinheit über eine Abzweigleitung verbunden. Die Kopplungseinrichtung weist auch eine Teilnehmerdiagnoseeinheit auf, um Fehler in einer Teilnehmereinheit oder der Abzweigleitung zu erkennen. Die Teilnehmerdiagnoseeinheit steuert ein Beeinflussungsmittel an, das an der Busleitung einen Zustand hervorruft, der von Vorgaben derart abweicht, dass er durch die Busdiagnoseeinheit als Abweichung erkannt werden kann. Dadurch kann über die Busdiagnoseeinheit auch ein Fehler in einer Teilnehmereinheit erkannt und angezeigt werden, auch wenn durch die Kopplungseinrichtung beispielsweise eine galvanische Trennung zwischen der Busleitung und der Abzweigleitung hergestellt ist. Das Beeinflussungsmittel kann beispielsweise eine niederohmige Verbindung zwischen einer Ader der Busleitung und einer Masseverbindung herstellen oder ein Signal zwischen Schirmung und den Busadern einspeist.

WO 2012/038472 A1 beschreibt ein Verfahren und eine Teilnehmerstation zum optimierten Übertragen von Daten zwischen Teilnehmerstationen eines Bussystems. Die Teilnehmerstation ist dazu eingerichtet, auf einer Busleitung eine Zwei-Kanal-Übertragung auszuführen. Hierfür weist die Teilnehmerstation zwei separate Controller auf, die jeweils nach einem vorgegebenen Kommunikationsprotokoll, beispielsweise "CAN" oder "Flex-Ray" arbeiten und entsprechend modulierte Daten bereitstellen. Mit Hilfe eines Eigenschaftssteuersignals werden die Daten der beiden Kommunikationskanäle mit Hilfe eines Koppelelements verknüpft und überlagert und können anschließend über die Busleitung übertragen werden.

WO 2011/007142 A1 beschreibt eine Buskommunikationsvorrichtung mit einer Spannungsversorgung, einer Diagnoseeinheit und einem an die Busleitung angeschlossenen Teilnehmer. Der Teilnehmer weist einen Attributmodifizierer auf. Über den Attributmodifizierer kann ein Attribut einer Bitübertragungsschicht derart verändert werden, dass es von der Diagnoseeinheit, die die Bitübertragungsschicht überwacht, erkannt werden kann. Auf diese Weise kann der Attributmodifizierer das Eindringen von Wasser in das Gehäuse der Teilnehmereinheit an die Diagnoseeinheit übermitteln.

Aus EP 2 073 435 A1 geht ein Ethernet-Bussystem hervor, bei dem zwischen verschiedenen an das Bussystem angeschlossenen elektrischen Fahrzeugkomponenten elektrische Energie über das Ethernet-Bussystem übertragen werden kann.

Ausgehend von derart bekannten Kommunikationsvorrichtungen, soll der Funktionsumfang der Buskommunikationsvorrichtung erweitert und insbesondere verbesserte Diagnosemöglichkeiten zur Verfügung gestellt werden.

Diese Aufgabe wird durch die Buskommunikationsvorrichtung gemäß Patentanspruch 1 erreicht.

Die Buskommunikationsvorrichtung weist wenigstens eine Teilnehmereinheit auf, die über eine Abzweigleitung an wenigstens eine Kopplungseinrichtung angeschlossen ist. An eine Kopplungseinrichtung können mehrere Teilnehmereinheiten angeschlossen sein. Die Kopplungseinrichtung ist auch an eine Busleitung angeschlossen. Ein vorzugsweise an die Busleitung angeschlossenes Kommunikationssteuergerät kann die Kommunikation steuern. Es kann durch einen Leitrechner gebildet sein, der anhand eines Kommunikationsprotokolls die Kommunikation der einzelnen Teilnehmereinheiten steuert. Die Kommunikationssteuerung kann aber auch zumindest teilweise von den Teilnehmereinheiten selbst gesteuert werden.

Als Busleitung dient insbesondere eine 2-adrige Leitung. Über die Busleitung wird die Teilnehmereinheit sowie das optional vorhandene Kommunikationssteuergerät mit elektrischer Energie versorgt, beispielsweise über eine Gleichspannungsquelle. Gleichzeitig erfolgt über die Busleitung eine Datenübertragung. Der Strom bzw. Gleichstrom, der über die Busleitung in die wenigstens eine Teilnehmereinheit fließt, kann durch die Teilnehmereinheit moduliert werden. Die Teilnehmereinheit ist dazu eingerichtet, eine erste Modulation des Stromes entsprechend einem vom Leitrechner vorgegebenen Kommunikationsprotokoll durchzuführen. Die erste Datenübertragungsrate mit der Daten durch die erste Modulation des Stromes übertragen werden können, kann beispielsweise im Bereich von etwa 20 bis 35 kbit pro Sekunde und insbesondere bei 31,25 kbit pro Sekunde liegen. Für die erste Modulation wird der aktuell von der Teilnehmereinheit aufgenommene Ruhestrom mit einer vorgegebenen Amplitude erhöht bzw. verringert, wodurch steigende und fallende Flanken entstehen. Diese Flanken und/oder die Stromamplituden können digitalen Werten entsprechen. Beispielsweise kann für die erste Modulation die Manchester-Kodierung verwendet werden.

Diese erste Modulation kann gleichanteilsfrei sein, so dass der Gleichstrommittelwert des in die Teilnehmereinheit fließenden Stromes durch die erste Modulation unverändert bleibt. Bei sehr niedrigen Ruheströmen kann die Gleichanteilsfreiheit nicht immer gewährleistet werden.

Erfindungsgemäß wird außerhalb des vorgegebenen Kommunikationsprotokolls ein weiterer Kommunikationskanal eingerichtet. Hierfür wird ebenfalls die Busleitung als Übertragungsmedium verwendet. Dieser zusätzliche Kommunikationskanal kann digitale Daten übertragen, die mittels wenigstens einer zweiten Modulation des in eine Kopplungseinrichtung fließenden Kopplungseinrichtungsstromes und/oder des in einen Teilnehmer fließenden Teilnehmerstromes gebildet werden. Es können auch eine oder mehrere unterschiedliche zweite Modulationen vorgesehen sein. Insbesondere die bislang in der Regel ohne Kommunikationsfunktionalität ausgeführte Kopplungseinrichtung kann über diese zweite Modulation auf einfache Weise eine Nachricht übertragen. Insbesondere ist für diese zweite Modulation des Stromes der Gradient des Stromes, also die zeitabhängige Stromänderung, kleiner als der Gradient des Stromes der ersten Modulation und beispielsgemäß kleiner als ein vorgegebener Gradienten-Maximalwert. Als Gradient des Stromes wird die Flankensteilheit der Stromänderung beim Umschalten zwischen einem oberen Wert des Stromes und einem unteren Wert des Stromes bezeichnet. Durch diese Unterscheidung ist es möglich, die gleichzeitig über die Busleitung übertragbaren Daten der ersten Modulation und der zweiten Modulation voneinander zu trennen.

Über die zweite Modulation des Kopplungseinrichtungsstromes bzw. des Teilnehmerstromes können Daten mit einer zweiten Datenübertragungsrate übermittelt werden, die um Größenordnungen, beispielsweise etwa den Faktor 1000 kleiner ist als die erste Datenübertragungsrate. Die zweite Modulation eignet sich daher z. B. für die Übertragung zeitunkritischer Informationen.

Beispielsweise kann die Kopplungseinrichtung einen Fehler und insbesondere einen Kurzschluss in der Abzweigleitung zu einem angeschlossenen Teilnehmer oder im Teilnehmer erkennen und durch eine Modulation des Kopplungseinrichtungsstromes gemäß der zweiten Modulation eine Fehlerzustandsmeldung über die Busleitung übertragen. Diese Fehlerzustandmeldung kann lediglich aus einem rampenförmigen Stromverlauf des Kopplungseinrichtungsstromes mit einer steigenden und einer fallenden Flanke bestehen, wobei der Gradient der Flanken insbesondere kleiner ist als der vorgegebene Gradienten-Maximalwert. Hierfür ist eine sehr einfache Ausgestaltung der Kopplungseinrichtung ausreichend. Beispielsweise mittels einer Diagnoseeinheit, die Bestandteil der Spannungsversorgung oder separat dazu ausgeführt sein kann, kann somit auch ein Kurzschluss in einer Abzweigleitung festgestellt werden. Die Stromaufnahme der betreffenden Kopplungseinrichtung hat in diesem Kurzschlussfall den charakteristischen rampenförmigen Verlauf, der einem einfachen Stromsignal gemäß der zweiten Modulation entspricht.

Bei der zweiten Modulation des Stromes handelt es sich vorzugsweise um eine vorgegebene Korrelationsfunktion, bei der die Frequenz und/oder die Amplitude der Stromaufnahme moduliert werden kann. Auch eine reine Frequenzmodulation ist möglich. Bei Frequenzen für die zweite Modulation im Bereich von beispielsweise 0 bis 10 Hz können entsprechend größere Amplituden des frequenzmodulierten Stromes gewählt werden, als beispielsweise bei Frequenzen im Bereich von 50 bis 60 Hz. Für die zweite Modulation können kleine Frequenzen von kleiner als 20 Hz oder insbesondere kleiner als 10 Hz gewählt werden, um einen größeren Störabstand zu erreichen. Neben der Amplituden- und/oder Frequenzmodulation können zusätzlich oder alternativ weitere Modulationsverfahren verwendet werden, wie beispielsweise die Quadraturamplitudenmodulation oder das sogenannte "Frequency Shift Keying" (z. B. MFSK) oder eine andere digitale Modulation mit einem oder mehreren Trägern.

Über diesen zusätzlichen durch die zweite Modulation des Stromes eingerichteten Kommunikationskanal können insbesondere Diagnosedaten und/oder Statusinformationen und/oder Belegungsinformationen und/oder Auslastungsinformationen oder dergleichen mittels der Kopplungseinrichtung und/oder der Teilnehmereinheit übermittelt werden, beispielsweise an ein übergeordnetes Asset-Management-System. Über dieses Asset-Management-System können zum Beispiel mehrere Buskommunikationsvorrichtungen gesteuert und/oder überwacht werden. Es können daher beispielsweise ergänzend zu einer Physical-Layer-Diagnose Informationen mithilfe dieser zweiten Modulation übertragen werden, etwa hinsichtlich der Gleichspannung, dem Gleichstrom, der Signalamplitude, der Störsignale, der Jitter oder der Teilnehmeradressen, oder andere die Kopplungseinrichtung bzw. die daran angeschlossenen Teilnehmereinheiten beschreibende Informationen. Durch die Kenntnis des Betriebszustandes, der Auslastung, von Fehlern oder Defekten in der Buskommunikationsvorrichtung, insbesondere in einer der Kopplungseinrichtungen bzw. in einem der Teilnehmereinheiten, kann das übergeordnete Asset-Management-System entsprechende geeignete Maßnahmen einleiten.

Bislang konnten Informationen nur anhand der vorgegebenen Kommunikation, also anhand der ersten Modulation, über die Busleitung übertragen werden. Eine Kommunikation durch die Kopplungseinrichtungen selbst war in der Regel nicht vorgesehen. Die Kopplungseinrichtungen waren bislang nicht diagnostizierbar und für das Asset-Management-System sozusagen "unsichtbar". Wenn die Kopplungseinrichtung eine galvanische Trennung der Busleitung gegenüber der wenigstens einen angeschlossenen Teilnehmereinheit bewirkt, war auch eine Fehlererkennung oder Diagnose der wenigstens einen Teilnehmereinheit durch das Asset-Management-System nicht möglich.

Zwar erweitert die Kommunikationsvorrichtung nach WO 2009/063213 A1 die Möglichkeiten der Diagnose. Allerdings ist auch hier eine Datenübertragung über die Busleitung bei einem Ausführungsbeispiel nur dann vorgesehen, wenn ansonsten keine Buskommunikation erfolgt. Die anderen Ausführungen der Kommunikationsvorrichtung nach WO 2009/063213 A1 führen zur Fehlerübermittlung eines Fehlers in der Abzweigleitung oder der Teilnehmereinheit gezielt einen Busleitungszustand herbei, der derart von dem Normalzustand abweicht, dass er von einer Busdiagnoseeinheit erkennbar ist.

Erfindungsgemäß können durch die Schaffung des zusätzlichen Kommunikationskanals Informationen, beispielsweise Fehler- oder andere Diagnosedaten, unabhängig und ohne Beeinträchtigung der Datenübertragung gemäß dem vorgegebenen Kommunikationsprotokoll zusätzlich und auch gleichzeitig mit einer Kommunikation gemäß der ersten Modulation übermittelt werden. Eine volle Kommunikationsfunktionalität der Kopplungseinrichtungen zur Übertragung von Daten anhand des Kommunikationsprotokolls ist aufwendig und teuer und kann durch die erfindungsgemäße Ausführung vermieden werden.

Bei einer bevorzugten Ausführungsform ist der Gradient des Stromes für die zweite Modulation auf einen Gradienten-Maximalwert begrenzt. Insbesondere kann dabei der Gradient der Modulation des Stromes für die erste Modulation immer oberhalb des Gradienten-Maximalwertes der zweiten Modulation liegen. Dadurch können gegenseitige Beeinträchtigungen vermieden werden. Der zusätzliche Kommunikationskanal belegt also ein der ersten Modulation fernliegendes Frequenzspektrum, das wesentlich niederfrequenter ist. Da anhand der Datenübertragung mit Hilfe der zweiten Modulation des Stromes zeitunkritische Informationen übertragen werden sollen, ist eine langsamere Datenübertragung in einem niederfrequenten Frequenzbereich möglich, ohne dass hierbei - trotz einer gegenüber der ersten Modulation geringeren Datenrate - beachtliche Nachteile entstehen.

Die wenigstens eine Kopplungseinrichtung und die wenigstens eine Teilnehmereinheit der Buskommunikationsvorrichtung kann insbesondere über die zweite Modulation des Stromes keine Informationen empfangen, sondern ist ausschließlich dazu eingerichtet, über die zweite Modulation Daten an das Kommunikationssteuergerät, beispielsweise den Leitrechner, und/oder das übergeordnete Asset-Management-System zu senden. Dies vereinfacht den Aufbau insbesondere der Kopplungseinrichtung.

Jeder Kopplungseinrichtung und/oder Teilnehmereinheit, die die zweite Modulation verwendet, kann jeweils eine charakteristische Frequenz (im Falle einer Frequenzmodulation) innerhalb eines vorgegebenen Frequenzbereichs oder eine charakteristisches Korrelationsfunktion zugeordnet werden. Die charakteristischen Frequenzen oder Korrelationsfunktionen einer Kopplungseinrichtung bzw. einer Teilnehmereinheit unterscheiden sich von den charakteristischen Frequenzen oder Korrelationsfunktionen anderer Kopplungseinrichtungen bzw. Teilnehmereinheiten. Dadurch kann eine Art Multiplexbetrieb erreicht werden und mehrere Kopplungseinrichtungen und/oder Teilnehmereinheiten können gleichzeitig Daten mit Hilfe der zweiten Modulation des Stromes senden. Die Daten bleiben unterscheidbar.

Bei einem Empfänger werden die anhand der zweiten Modulation erzeugten Stromsignale detektiert. Der Empfänger ist in Reihe zu der Busleitung geschaltet. Der Empfänger ist insbesondere der Gleichspannungsquelle zugeordnet oder in die Spannungsversorung integriert. Beispielsweise kann eine häufig ohnehin vorhandene Diagnoseeinheit zur Diagnose des Physical-Layers als Empfänger zur Signaldetektion verwendet werden. Dieser Empfänger kann dann die durch die zweite Modulation empfangenen und demodulierten Signale weiterleiten, insbesondere zum Asset-Management-System und/oder dem Kommunikationssteuergerät bzw. dem Leitrechner. Diese Weiterleitung kann vorzugsweise über die Busleitung anhand der ersten Modulation innerhalb des Kommunikationsprotokolls oder auch über eine separate Übertragungsleitung erfolgen. Eine bereits vorhandene Physical-Layer-Diagnoseeinheit kann somit eine weitere Funktion aufweisen, nämlich die Diagnose der wenigstens einen Kopplungseinrichtungen und/oder der wenigstens einen Teilnehmereinheit.

Bei einem Ausführungsbeispiel kann jede Kopplungseinrichtung dazu vorgesehen und eingerichtet sein, jeweils nur einer angeschlossenen Teilnehmereinheit die Modulation des aufgenommenen Stromes gemäß der ersten Modulation zu erlauben. Die Anzahl der an die Busleitung angeschlossenen Kopplungseinrichtungen kann begrenzt werden. Dadurch wird auch die Anzahl der gleichzeitig den aufgenommenen Strom modulierenden Teilnehmereinheiten und Kopplungseinrichtung begrenzt.

Beispielsweise kann die Kopplungseinrichtung anhand eines Token-Passing-Verfahrens stets einer Teilnehmereinheit die erste Modulation des Stromes gestatten. Auch andere Mittel zur Begrenzung der Anzahl der gleichzeitig den Strom modulierenden Teilnehmereinheiten können alternativ verwendet werden.

Vorteilhafte Ausgestaltungen der Erfindung ergeben sich aus den abhängigen Patentansprüchen und der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung erläutert.

Es zeigen:

Figur 1 ein Blockschaltbild eines Ausführungsbeispiels einer Buskommunikationsvorrichtung,

Figur 2 eine beispielhafte schematische Darstellung des durch die erste Modulation modulierten aufgenommenen Teilnehmerstromes einer Teilnehmereinheit,

Figur 3 eine schematische, beispielhafte Darstellung des von der Kopplungseinrichtung aufgenommenen Kopplungseinrichtungsstromes, der über eine zweite Modulation moduliert ist,

Figur 4 eine schematische, beispielhafte Darstellung des über die Busleitung fließenden Stromes,

Figur 5 ein Blockschaltbild eines Ausführungsbeispiels einer Kopplungseinrichtung und

Figur 6 ein Blockschaltbild eines Ausführungsbeispiels einer Strombegrenzungseinheit für die Kopplungseinrichtung.

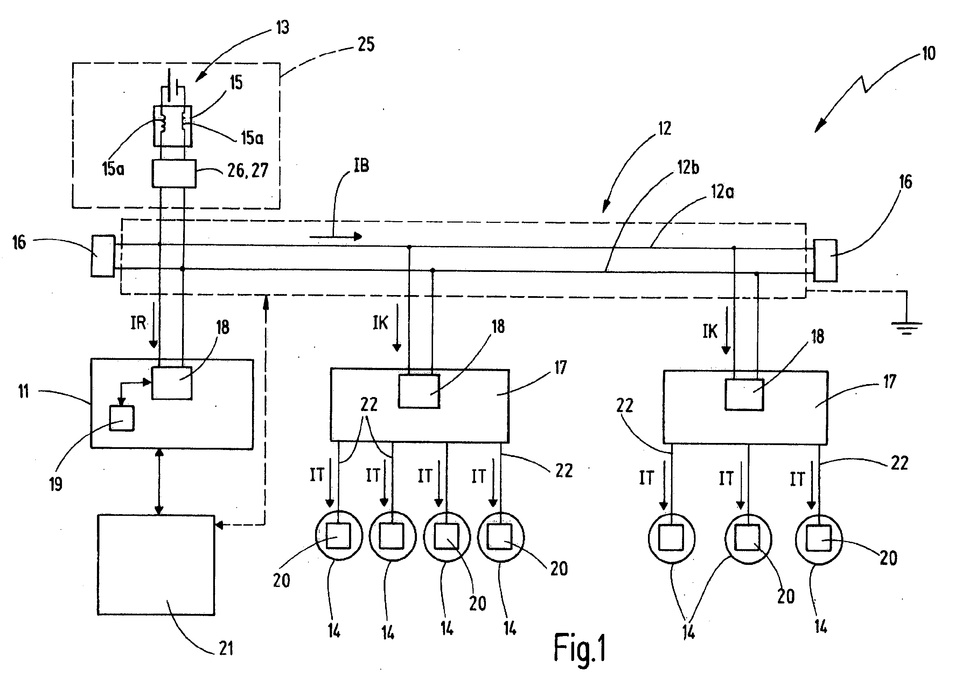

In Figur 1 ist ein Blockschaltbild einer Ausführungsform einer Buskommunikationsvorrichtung 10 veranschaulicht. Die Buskommunikationsvorrichtung 10 weist ein Kommunikationssteuergerät 11, zum Beispiel einen Leitrechner auf, der an eine Busleitung 12 angeschlossen ist. Der Leitrechner dient zur Steuerung der Kommunikation über die Busleitung 12 gemäß einem vorgegebenen Kommunikationsprotokoll. Die Busleitung 12 ist beispielsgemäß als zweiadriges, vorzugsweise geschirmtes Kabel ausgeführt, das eine erste Ader 12a und einer zweite Ader 12b aufweist. In Abwandlung hierzu können auch mehr als zwei Adern 12a, 12b vorgesehen sein. Die Adern 12a, 12b können verdrillt sein.

Alternativ zu einem Leitrechner kann die Steuerung der Kommunikation auch durch an die Busleitung 12 angeschlossene Teilnehmereinheiten 14 sozusagen vor Ort erfolgen. Dem Kommunikationssteuergerät 11 kommt dabei nur eine eingeschränkte Steueraufgabe zu. Das Kommunikationssteuergerät 11 kann in diesem Fall auch als Baueinheit mit einer Teilnehmereinheit 14 ausgeführt sein.

An die Busleitung 12 ist außerdem eine Energiequelle, beispielsgemäß eine Spannungsversorgung 25 mit einer Gleichspannungsquelle 13 angeschlossen. Die Gleichspannungsquelle 13 dient zur Versorgung von an die Busleitung 12 angeschlossenen Teilnehmereinheiten 14 und des Leitrechners 11 mit für die Kommunikation benötigter elektrischer Energie, die auch als Hilfsenergie bezeichnet werden kann. Die Verbindung zwischen der Gleichspannungsquelle 13 und der Busleitung 12 ist über einen Zwischenkreis 15 hergestellt. Der Zwischenkreis 15 kann Mittel aufweisen, die eine Rückwirkung der Gleichspannungsquelle 13 auf die auf der Busleitung 12 stattfindenden Spannungs- und/oder Stromänderungen vermeiden, wie zum Beispiel eine oder mehrere Induktivitäten 15a. Dadurch wird ein Kurzschluss von Kommunikationssignalen durch die Gleichspannungsquelle 13 vermieden.

Die Spannungsversorgung 25 weist außerdem eine Diagnoseeinheit 26 auf. Die Diagnoseeinheit 26 dient dazu, den sogenannten Physical-Layer, auch als Bitübertragungsschicht bezeichnet, zu diagnostizieren. Dem Physical-Layer sind die Geräte und Buskomponenten der Buskommunikationsvorrichtung 10 zugeordnet. Er stellt mechanische, elektrische und weitere funktionale Mittel zur Verfügung, um physische Verbindungen zu aktivieren oder zu deaktivieren, sie aufrechtzuerhalten und Signale darüber zu übertragen.

Alternativ zum Ausführungsbeispiel kann die Diagnoseeinheit 26 auch separat zu der Spannungsversorgung 25 ausgeführt sein. Es ist außerdem möglich, die Spannungsversorgung 25 und die Kommunikationssteuerung 18, 19 des Leitrechners 11 zu einer Einheit zusammenzufassen, die beispielsweise beim Profibus PA als Segmentkoppler bezeichnet wird.

Die Busleitung 12 ist an ihren Leitungsenden jeweils über eine Abschlussschaltung 16 abgeschlossen. Die Abschlussschaltung 16 kann beispielsweise von einer R-C-Reihenschaltung mit einem Ohmschen Widerstand und einem Kondensator gebildet sein, um Reflexionen am Leitungsende zu vermeiden.

Die Teilnehmereinheiten 14 sind nicht unmittelbar an die Busleitung 12 angeschlossen. Zwischen einer Teilnehmereinheit 14 und der Busleitung 12 ist zur Kopplung eine Kopplungseinrichtung 17 zwischengeschaltet. An jede Kopplungseinrichtung 17 können mehrere Teilnehmereinheiten 14 über jeweils eine zweiadrige Abzweigleitung 22 angeschlossen werden, beispielsweise bis zu acht Teilnehmereinheiten 14. Die Kopplungseinrichtung 17 kann abhängig von der Anwendung auch eine galvanische Trennung zwischen der Busleitung 12 und den angeschlossenen Abzweigleitungen 22 bzw. Teilnehmereinheiten 14 aufweisen, beispielsweise durch Optokoppler oder Übertrager.

Die Anzahl der über die Busleitung 12 miteinander verbundenen Teilnehmereinheiten 14 und/oder der Kopplungseinrichtungen 17 kann variieren. In Figur 1 sind beispielhaft zwei Kopplungseinrichtungen 17 und sieben Teilnehmereinheiten 14 veranschaulicht. Bei einem bevorzugten Ausführungsbeispiel der Buskommunikationsvorrichtung 10 ist die Anzahl der Kopplungsvorrichtungen 17 begrenzt, beispielsweise auf vier Kopplungseinrichtungen 17. Da an jede Kopplungseinrichtung 17 ebenfalls nur eine begrenzte Anzahl von Teilnehmereinheiten 14 anschließbar ist, ist auch die Anzahl der Teilnehmereinheiten 14 der Buskommunikationsvorrichtung 10 begrenzt.

Sowohl das Kommunikationssteuergerät 11 als auch die wenigstens eine Kopplungseinrichtungen 17 weist beispielsgemäß ein Signalfilter 18 auf, um nur die jeweils relevanten Kommunikationssignale zu empfangen und andere Signale zu blockieren. Zur Modulation und/oder Demodulation von Signalen gemäß einer ersten Modulation M1 weist der Leitrechner 11 zumindest eine erste Modulator-Demodulator-Einheit 19 auf. Zum Senden und Empfangen von Daten weist jede Teilnehmereinheit 14 jeweils eine zweite Modulator-Demodulator-Einheit 20 auf.

Bei dem Ausführungsbeispiel nach Figur 1 ist ferner ein übergeordnetes Asset-Management-System 21 vorhanden, die mit dem Kommunikationssteuergerät 11 und/oder den Kopplungseinrichtungen 17 kommunizieren kann. Gemäß Figur 1 ist an das Asset-Management-System 21 nur eine Buskommunikationsvorrichtung 10 angeschlossen. Es versteht sich, dass abweichend hierzu auch mehrere Buskommunikationsvorrichtungen 10 an ein gemeinsames Asset-Management-System 21 angeschlossen sein könnten.

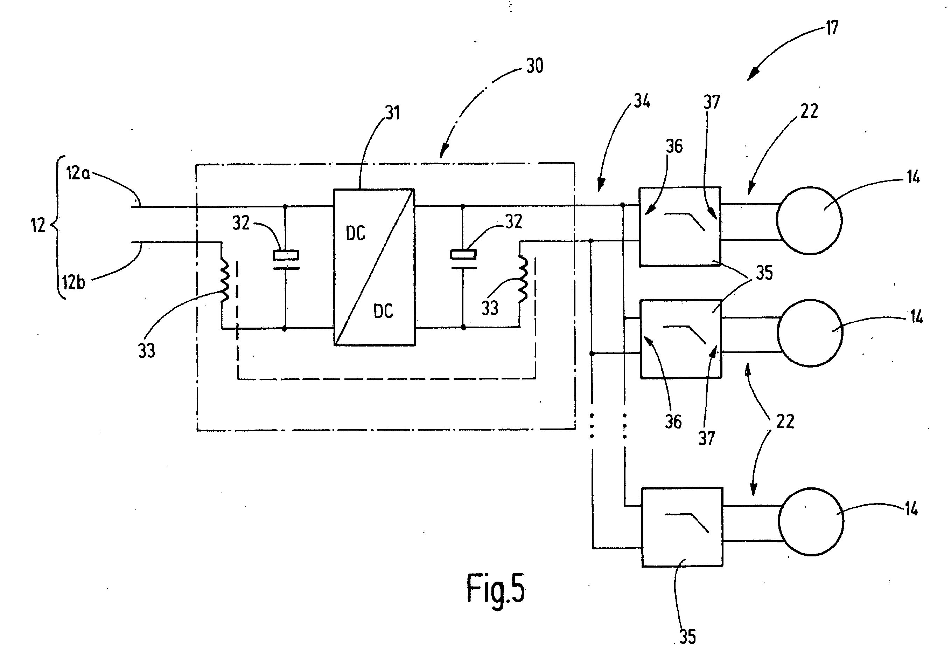

In Figur 5 ist ein Blockschaltbild eines Ausführungsbeispiels einer Kopplungseinrichtung 17 veranschaulicht. Bei diesem Ausführungsbeispiel ist eine Übertragungseinheit 30 mit einem Gleichspannungswandler 31 vorgesehen. Die Übertragungseinheit 30 ist optional und kann bei einer vereinfachten Ausführung der Kopplungseinrichtung 17 entfallen.

Eingangsseitig und ausgangsseitig des Gleichspannungswandlers 31 ist jeweils ein Kondensator 32 parallel zu den beiden Eingängen bzw. zu den beiden Ausgängen geschaltet, über den Wechselstromanteile kurzgeschlossen werden. In einer der beiden Eingangsleitungen des Gleichspannungswandlers 31 sowie in der entsprechenden Ausgangsleitung des Gleichspannungswandlers 31 ist jeweils eine Übertragerspule 33 angeordnet, die miteinander gekoppelt sind. Über die beiden gekoppelten Übertragerspulen 33 werden Wechselstromanteile unter Umgehung des Gleichspannungswandlers 31 übertragen.

Die Übertragungseinheit 30 ist eingangsseitig mit den beiden Adern 12a, 12b der Busleitung 12 sowie ausgangsseitig mit einer zweiadrigen Ausgangsleitung 34 verbunden. Über die zweiadrige Ausgangsleitung 34 werden die Abzweigleitungen 22 zu den Teilnahmereinheiten 14 parallel zueinander mit der Übertragungseinheit 30 verbunden.

Zwischen der Ausgangsleitung 34 und jeder Abzweigleitung 22 zu einer der Teilnehmereinheiten 14 ist jeweils eine Strombegrenzungseinrichtung 35 angeordnet. Die Anzahl der Strombegrenzungseinrichtungen 35 entspricht der Anzahl der anschließbaren Teilnehmereinheiten 14.

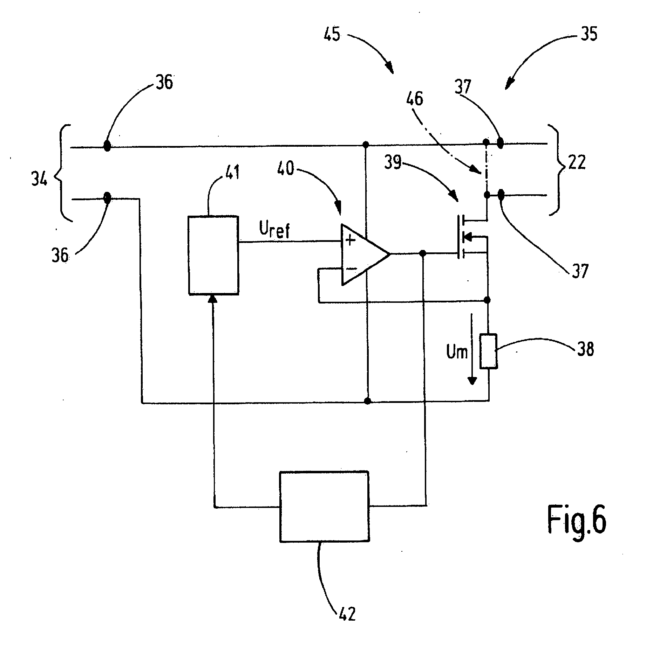

Ein Blockschaltbild einer Ausführungsform der Strombegrenzungseinrichtung 35 ist in Figur 6 dargestellt. Einer der beiden Eingänge 36 zum Anschließen der Ausgangsleitung 34 ist unmittelbar mit einem der beiden Ausgänge 37 zum Anschluss der Abzweigleitung 22 elektrisch verbunden. Der jeweils andere Eingang 36 der Strombegrenzungseinrichtung 35 ist über einen Messwiderstand 38 und die gesteuerten Anschlüsse eines gesteuerten Halbleiterelements 39, beispielsweise eines Steuertransistors, mit dem jeweils anderen Ausgang 37 der Strombegrenzungseinrichtung 35 verbunden. Der Steuertransistor ist beim Ausführungsbeispiel als MOSFET ausgeführt, könnte alternativ auch von einem Bipolartransistor gebildet sein. Der Messwiderstand 38 ist beispielsgemäß an den Source-Anschluss des Steuertransistors angeschlossen und damit in Reihe zur Drain-Source-Verbindung geschaltet. Der Drain-Anschluss ist mit dem Ausgang 37 verbunden.

Der Steuereingang des gesteuerten Halbleiterelements 39, beispielsgemäß das Gate des Steuertransistors, ist mit dem Ausgang eines Operationsverstärkers 40 verbunden. Der invertierende Eingang dieses Operationsverstärkers 40 ist über den Messwiderstand 38 mit einem der Eingänge 36 der Strombegrenzungseinrichtung verbunden, so dass die am Messwiderstand 38 anliegende Messspannung Um am invertierenden Eingang des Operationsverstärkers 40 anliegt.

Die Strombegrenzungseinrichtung 35 weist außerdem eine Referenzspannungsquelle 41 auf, über die eine Referenzspannung Uref an den nicht-invertierenden Eingang des Operationsverstärkers 40 angelegt wird. Die Referenzspannungsquelle 41 wird von einer Spannungssteuereinheit 42 angesteuert, über die der Gleichspannungswert der Referenzspannung Uref verändert werden kann. Der Gleichspannungswert der Referenzspannung Uref wird abhängig vom Ausgangssignal des Operationsverstärkers 40 eingestellt, das der Spannungssteuereinheit 42 übermittelt wird.

Steigt der Strom an der Ausgangsleitung 34 und mithin in der Busleitung 12 an, erhöht sich die am Messwiderstand 38 anliegende Messspannung Um. Dadurch sinkt die Spannung am Steuereingang des Steuertransistors 39, wodurch der Strom zum Ausgang 37 absinkt. Dadurch lässt sich der Strom am Ausgang 37 und mithin der Teilnehmerstrom IT zu den Teilnehmereinheiten 14 begrenzen.

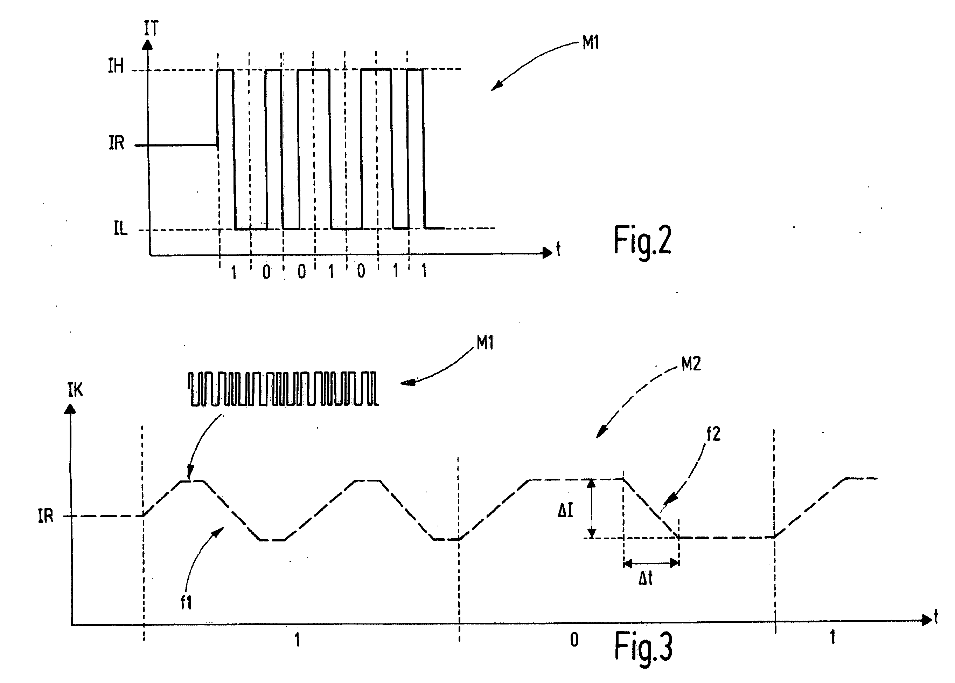

Die Buskommunikationsvorrichtung 10 gemäß Figur 1 arbeitet wie nachfolgend anhand der Figuren 2 bis 4 erläutert.

Bei der Buskommunikationsvorrichtung 10 wird zur Datenübertragung über die Busleitung 12 der von einer Teilnehmereinheit 14 aufgenommene Teilnehmerstrom IT gemäß einer durch Kommunikationsprotokoll vorgegebenen ersten Modulation M1 moduliert. Moduliert eine Teilnehmereinheit 14 den von ihr aufgenommenen Teilnehmerstrom IT, so wird dadurch auch der in die zugeordnete Kopplungseinrichtung 17 fließende Kopplungseinrichtungsstrom IK sowie der über die Busleitung 12 fließende Busleitungsstrom IB moduliert. Sowohl das Kommunikationssteuergerät 11, als auch andere an die Busleitung 12 angeschlossene Teilnehmer 14 können die Modulation des über die Busleitung 12 fließenden Busleitungsstromes IB erfassen und über die zugeordnete Modulator-Demodulator-Einheit 19 bzw. 20 demodulieren und auswerten. Auf diese Weise können die Teilnehmer 14 untereinander und/oder mit dem Leitrechner 11 kommunizieren.

Die Buskommunikationsvorrichtung 10 sieht zur Datenübertragung neben der ersten Modulation M1 auch eine zweite Modulation M2 vor.

Die erste Modulation M1 erfolgt beim Ausführungsbeispiel gesteuert über den Leitrechner anhand des vorgegebenen Kommunikationsprotokolls. Dieses Kommunikationsprotokoll kann beispielsweise dem üblichen Protokoll eines Feldbussystems, wie etwa eines FF-H1-Feldbussystems oder eines Profibus-PA-Sytems entsprechen.

Die erste Modulation M1 des aufgenommenen Teilnehmerstromes IT durch eine Teilnehmereinheit 14 ist beispielhaft in Figur 2 dargestellt. Über die Busleitung 12 erhält die Teilnehmereinheit 14 einen Ruhestrom IR, der beispielsweise im Bereich von 10 bis 25 mA liegen kann. Zur Übertragung von Daten bei der ersten Modulation M1 wird der Ruhestrom IR um eine vorgegebene Amplitude erhöht bzw. verringert, so dass er zwischen einem oberen Wert IH und einem unteren Wert IL hin und her springt. Die Differenz zwischen dem Ruhestrom IR und dem oberen Wert IH sowie zwischen dem Ruhestrom IR und dem unteren Wert IL ist gleich groß.

Die erste Modulation M1 erfolgt beim Ausführungsbeispiel gemäß IEC61158-2 und ist beispielsgemäß gleichanteilsfrei, so dass der effektiv von der Teilnehmereinheit 14 aufgenommene Teilnehmerstrom IT durch die erste Modulation M1 nicht verändert wird. Beim Ausführungsbeispiel wird zur ersten Modulation M1 des Teilnehmerstromes IT eine Manchester-Kodierung angewandt. Eine vom oberen Wert IH auf den unteren Wert IL fallende Flanke entspricht dem digitalen Wert "1", während eine vom unteren Wert IL auf den oberen Wert IH ansteigende Flanke dem digitalen Wert "0" entspricht oder auch umgekehrt. Es kann auch eine differentielle Machester-Kodierung verwendet werden, bei die Phasenlage eines Taktsignals invertiert wird oder nicht je nachdem ob eine logische "1" oder eine logische "0" übertragen wird, wobei es auch dabei zwei Möglichkeiten der Definition von "1" und "0" gibt. Bei dieser ersten Modulation M1 können die Zeitdauern, während der der Teilnehmerstrom IT seinen oberen Wert IH einnimmt und die Zeitdauern, während der der Teilnehmerstrom IT dem unteren Wert IL entspricht, gleich lang gewählt werden, wodurch der Mittelwert des Teilnehmerstromes IT unverändert bleibt.

Die erste Datenübertragungsrate beim Übertragen von Daten anhand der ersten Modulation M1 des Teilnehmerstroms IT durch eine Teilnehmereinheit 14 liegt beispielsweise bei etwa 31 kbit pro Sekunde. Die Flankensteilheit der Stromänderung, also der Gradient des Stroms beim Umschalten zwischen dem oberen Wert IH und dem unteren Wert IL ist sehr groß und kann etwa 2900 Milliampere pro Millisekunde betragen. Der Gradient des anhand der ersten Modulation M1 modulierten Teilnehmerstromes IT soll möglichst groß sei, was durch schematisch in Figur 2 gezeigte senkrechte Stromflanken veranschaulicht ist. Die Steilheit der Stromflanken ist durch die zur Verfügung stehende Bandbreite der Kommunikation begrenzt. Gemäß dem Kommunikationsprotokoll können daher anhand der ersten Modulation M1 digitale Daten über die Busleitung 12 übertragen werden.

Alle Teilnehmereinheiten 14 und das beispielsgemäß durch den Leitrechner gebildete Kommunikationssteuergerät 11 können über ihre jeweilige Modulator-Demodulator-Einheit 19 bzw. 20 sowohl anhand der ersten Modulation M1 erzeugte digitale Daten empfangen, als auch senden. Für die Kommunikation mittels der ersten Modulation M1 kann jede Teilnehmereinheit 14 sowie der Leitrechner 11 als Sender und als Empfänger arbeiten. Analog zu den Teilnehmereinheiten 14 kann der Leitrechner 11 den aufgenommenen Leitrechnerstrom IR modulieren.

Der Leitrechner 11 stellt sicher, dass zu jedem Zeitpunkt nur eine der Teilnehmereinheiten 14 oder der Leitrechner 11 selbst eine erste Modulation M1 des jeweiligen Stromes IT, IR durchführt, so dass immer nur ein Sender zu jedem Zeitpunkt aktiv ist. Beispielsweise kann der Leitrechner 11 Teilnehmereinheiten 14 zur Datenübertragung durch die erst Modulation M1 des jeweiligen Teilnehmerstromes IT nach einem Master-Slave-Verfahren auffordern. Es ist auch möglich, dass an die Busleitung 12 mehrere als Master agierende Leitrechner 11 angeschlossen sind. Diese können dann durch ein Token-Passing-Verfahren oder ähnliches sicherstellen, dass jeweils nur einer der Leitrechner 11 eine Sendeberechtigung hat, bzw. Daten von einer der passiven Teilnehmereinheiten 14 abruft.

Neben dieser durch das Kommunikationsprotokoll der Buskommunikationsvorrichtung 10 ablaufenden Datenübertragung durch die erste Modulation M1 ist erfindungsgemäß eine zweite Modulation M2 des Kopplungseinrichtungsstromes IK durch eine Kopplungseinrichtung 17 vorgesehen. Diese zweite Modulation M2 dient zur unidirektionalen Übertragung von Daten von einer Kopplungseinrichtung 17 zum Kommunikationssteuergerät 11 und bei dem hier beschriebenen Ausführungsbeispiel zum Leitrechner. Diese zweite Modulation M2 des Kopplungseinrichtungsstromes IK kann zeitgleich mit der ersten Modulation M1 eines Teilnehmerstromes IT erfolgen. Die beiden Modulationen M1, M2 arbeiten völlig unabhängig voneinander. Die Datenübertragung anhand der zweiten Modulation M2 ist nicht durch das ansonsten vorgegebene Kommunikationsprotokoll gesteuert oder definiert. Über die zweite Modulation M2 des Kopplungseinrichtungsstromes IK kann daher ein weiterer Kommunikationskanal auf der Busleitung 12 bereitgestellt werden ohne die erste Modulation zu stören oder einen Fehler hervorzurufen. Über diesen zusätzlichen Kommunikationskanal werden beim Ausführungsbeispiel Statusinformationen einer Kopplungseinrichtung 17 mittelbar an den Leitrechner 11 und/oder das Asset-Management-System 21 übermittelt. Dem Leitrechner 11 und/oder dem Asset-Management-System 21 können beispielsweise die Auslastung einer Kopplungseinrichtung 17, deren Funktionsfähigkeit, der aktuelle Betriebszustand oder ähnliche Statusinformationen übermittelt werden. Auch eine beliebige Kombination der genannten Informationen kann übertragen werden.

Die Diagnoseeinheit 26 für den Physical Layer der Buskommunikationsvorrichtung 10 dient anders als beim Stand der Technik auch als Empfänger 27 für die korrelierten bzw. modulierten Stromsignale gemäß der zweiten Modulation M2. Die empfangenen und über eine entsprechende Korrelationsfunktion oder Demodulation erhaltenen Signale bzw. Informationen werden vom Empfänger 27 an das Kommunikationssteuergerät bzw. den Leitrechner 11 und/oder an das Asset-Management-System 21 übermittelt. Zu diesem Zweck kann die Spannungsversorgung 25 bzw. der Empfänger 27 über eine separate Übertragungsleitung mit dem Leitrechner 11 und/oder dem Asset-Management-System 21 verbunden sein. Alternativ und beispielsgemäß erfolgt die Übermittlung der vom Empfänger 27 über die zweite Modulation M2 empfangenen Informationen über die Busleitung 12 gemäß dem Kommunikationsprotokoll, also beispielsgemäß gemäß der ersten Modulation.

Eine sehr einfache zu realisierende Möglichkeit für eine Datenübertragung nach der zweiten Modulation wird anhand der Figuren 5 und 6 erläutert:

Tritt in der Abzweigleitung 22 ein Kurzschluss auf, wird der Steuertransistor 39 über den Operationsverstärker 40 in seinen sperrenden Zustand gebracht, so dass kein Teilnehmerstrom IT mehr fließt. Die Spannungssteuereinheit 42 erkennt den Kurzschlusszustand durch Auswertung des Ausgangssignals des Operationsverstärkers. Sie veranlasst daraufhin einmalig oder auch zyklisch die Erzeugung eines rampenförmigen Stromverlaufs des Kopplungseinrichtungsstromes IK mit einer ansteigenden und einer nach einer vorgegebenen Zeitdauer abfallenden Flanke, wobei die Flankensteilheit kleiner ist als der Gradienten-Maximalwert. Diese Modulation der Stromaufnahme des Kopplungseinrichtungsstromes IK entspricht einer Datenübermittlung gemäß der zweiten Modulation M2, so dass über die Busleitung 12 die Information übermittelt wird, dass an einer der Abzweigleitungen 22 der Kopplungseinrichtung 17 ein Kurzschluss erkannt wurde. Dieser rampenförmige Verlauf des Kopplungseinrichtungsstromes IK ist mit zwei Flanken ein sehr einfaches moduliertes Signal, das abhängig von der Codierung ein oder zwei Bit aufweist.

Dieses Fehlerzustandssignal gemäß der zweiten Modulation kann zyklisch wiederholt über die Spannungssteuereinheit 42 durch eine entsprechende Veränderung der am nicht-invertierenden Eingang des Operationsverstärkers 40 anliegenden Referenzspannung Uref erzeugt werden. Sobald der Kurzschluss behoben ist, geht die Kopplungseinrichtung 17 wieder in ihren normalen Betriebszustand über.

In Abwandlung zu dem oben beschriebenen Ausführungsbeispiel kann die in Figur 6 dargestellte Schaltung der Strombegrenzungseinrichtung 35 mit einer geringen Änderung auch als Modulationsschaltung 45 in der Kopplungseinrichtung 17 vorgesehen werden. Dabei ist anstelle der Abzweigleitung 22 zwischen den Anschlüssen 37 am Ausgang eine Kurzschlussverbindung 46 vorhanden, was in Figur 6 strichpunktiert dargestellt ist. Eine Teilnehmereinheit 14 ist nicht an die Modulationsschaltung 45 angeschlossen. Über die Spannungssteuereinheit 42 kann eine Änderung der Referenzspannung Uref erfolgen, die die Stromaufnahme der Kopplungseinrichtung 17 beeinflusst, also den Kopplungseinrichtungsstrom IK. Die Modulationsschaltung 45 dient sozusagen als Stromsenke. Dadurch kann der Kopplungseinrichtungsstrom IK gemäß der zweiten Modulation M2 moduliert werden. Es können dadurch auch beliebige digitale Informationen gemäß der zweiten Modulation von der Kopplungseinrichtung 17 erzeugt und auf die Busleitung 12 übermittelt werden.

Es ist mittels der Modulationsschaltung 45 außerdem möglich, den Kopplungseinrichtungsstrom IK gemäß der ersten Modulation M1 zu modulieren, so dass die Kopplungseinrichtung 17 eine noch umfassendere Kommunikationsmöglichkeit erhält.

Die Modulationsschaltung 45 und/oder die Strombegrenzungseinrichtung 35 können an der Sekundärseite der Übertragungseinheit 30 angeordnet sein. Modulationen des Stromes mit geringem Gradienten G, insbesondere unterhalb des Gradienten-Maximalwert, werden über den Gleichspannungswandler 31 auf die Primärseite und mithin die Busleitung 12 übertragen. Modulationen des Stromes mit größerem Gradienten G, insbesondere oberhalb des Gradienten-Maximalwertes, werden über die gekoppelten Übertragerspulen 33 auf die Primärseite und mithin auf die Busleitung 12 übertragen.

Der Gradient G des Kopplungseinrichtungsstromes IK ist definiert durch eine Stromänderung $\Delta IK$ innerhalb eines Zeitraumes $\Delta t$:

$$G = \frac{\Delta IK}{\Delta t}.$$

Dieser Gradient G darf bei der zweiten Modulation M2 des Kopplungseinrichtungsstromes IK den vorgegebenen Gradienten-Maximalwert nicht überschreiten, damit die erste Modulation nicht gestört wird. Der Gradienten-Maximalwert kann beispielsweise 1 mA/ms betragen. Wie anhand der schematischen Figuren 2 und 3 zu erkennen ist, ist der Gradient des Kopplungseinrichtungsstromes IK bei der ersten Modulation M1 größer als der Gradient G des Kopplungseinrichtungsstromes IK bei der zweiten Modulation M2. Vorzugsweise ist der Gradient des Stromes bei der ersten Modulation M1 immer größer als der für die zweite Modulation M2 geltende Gradienten-Maximalwert. Dadurch lassen sich Signalbeeinflussungen bei gleichzeitiger erster und zweiter Modulation M1, M2 besser vermeiden. Beispielsweise kann der Gradient des Stromes bei der ersten Modulation M1 etwa 2900 mA/ms betragen.

Die zweite Datenübertragungsrate, die anhand der zweiten Modulation M2 des Kopplungseinrichtungsstromes IK erreicht wird, ist deutlich kleiner als die durch die erste Modulation M1 erreichte Datenübertragungsrate und beispielsweise um mehrere Größenordnungen kleiner.

Es sind auch komplexere Nachrichten über die zweite Modulation M2 übertragbar. Die zweite Modulation M2 des Kopplungseinrichtungsstromes IK kann durch eine vorgegebene Korrelationsfunktion erfolgen oder auch durch eine Frequenz- und/oder Amplitudenmodulation. Im Falle der reinen Frequenzmodulation kann der Frequenzbereich für die zweite Modulation M2 des Kopplungseinrichtungsstromes IK zwischen 0 Hz und etwa 100 Hz liegen. Die zweite Modulation M2 des Kopplungseinrichtungsstromes IK mit einer ersten charakteristischen Frequenz f1 kann zum Beispiel dem digitalen Wert "1" entsprechen, während die Modulation mit einer zweiten charakteristischen Frequenz f2 dem digitalen Wert "0" entsprechen kann. Die reine Frequenzmodulation kann jedoch Interferenzen durch andere Teilnehmer ausgesetzt sein und ist deshalb nicht immer geeignet. Bevorzugt wird eine Korrelationsfunktion für den Strom im Rahmen der zweiten Modulation M2.

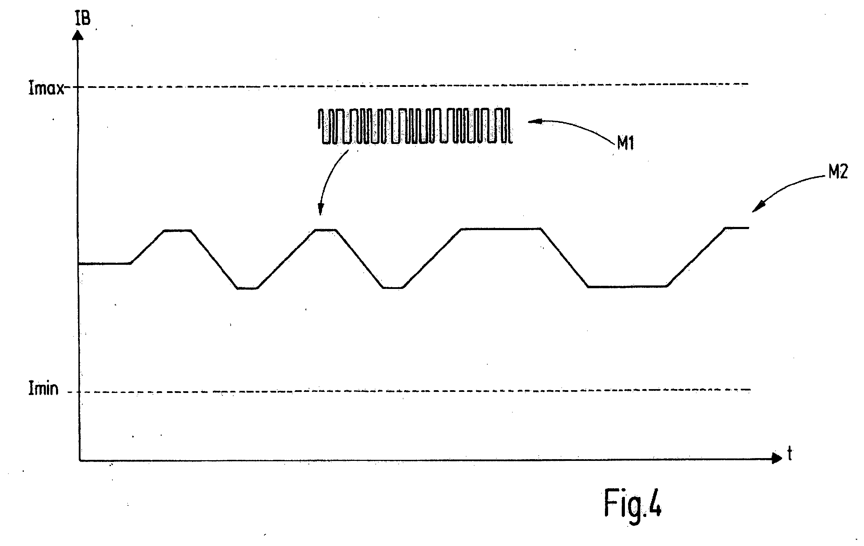

Durch ein geeignetes Modulation- oder Korrelationsverfahren des Kopplungseinrichtungsstromes IK ein digitales Datenwort beliebiger Länge als Statusinformation an den Leitrechner 11 übertragen werden, wie dies in Figur 3 schematisch dargestellt ist. Es ist dabei möglich, gleichzeitig den Kopplungseinrichtungsstrom IK einer Kopplungseinrichtung 17 anhand der zweiten Modulation M2 und den Teilnehmerstrom IT eines Teilnehmers 14 anhand der ersten Modulation M1 zu modulieren. Dadurch kann der über die Busleitung fließende Busleitungsstrom IB durch zumindest eine zweite Modulation M2 eines der Kopplungseinrichtungsströme IK und durch eine erste Modulation M1 eines der Teilnehmerströme IT oder des Leitrechnerstromes IR moduliert werden, was beispielhaft und sehr stark schematisiert in Figur 4 dargestellt ist.

Sollen mehrere Kopplungseinrichtungen 17 gleichzeitig ihren jeweiligen Kopplungseinrichtungsstrom IK gemäß der zweiten Modulation M2 modulieren und Statusinformationen übermitteln können, kann jeder Kopplungseinrichtung eine andere Korrelationsfunktion zugeordnet sein, so dass sich die Datenübertragungen gemäß der zweiten Modulation nicht gegenseitig stören und am Empfänger voneinander unterscheidbar sind. Dadurch ist bei der Demodulation der Daten am Empfänger auch eine eindeutige Erkennung des Senders möglich.

Die erste Modulator-Demodulator-Einheit 19 des Kommunikationssteuergeräts 11 dient im Rahmen der Datenübertragung durch die zweite Modulation M2 nur zur Demodulation, weil das Kommunikationssteuergerät 11 für diese Kommunikation beispielsgemäß nur als Empfänger ausgestaltet ist.

Für die erste Modulation M1 bilden das Signalfilter 18 und die Abschlusseinheiten 16 eine Impedanz Z für das Kommunikationssignal. Bei Strommodulation ergibt sich eine Spannung $u(M1) = i(M1) * Z$, die von allen an die Busleitung 12 angeschlossenen Einheiten abgegriffen werden kann. Für die erste Modulation M1 ist alternativ zum oben beschriebenen Ausführungsbeispiel auch eine Spannungsmodulation möglich. Das Signalfilter 18 kann je nach Ausführung auch für die zweite Modulation M2 wirksam sein - dann wären die sich ergebenden Spannungssignale $u(M2) = i(M2) * Z$ für alle Teilnehmer detektierbar. Dies ist beim Ausführungsbeispiel nicht vorgesehen. Stromänderungen außerhalb der ersten Modulation M1 werden beispielsgemäß durch das Signalfilter 18 der Kopplungseinrichtungen 17 blockiert und nicht an die Teilnehmereinheiten 14 weitergeleitet, da diese beispielsgemäß keine anhand der zweiten Modulation M2 modulierten Daten empfangen.

Es wäre alternativ oder zusätzlich zu der oben beschriebenen Ausführung auch möglich, dass eine oder mehrere der Teilnehmereinheiten 14 den Teilnehmerstrom IT gemäß der zweiten Modulation M2 modulieren können, um Daten zu übermitteln. Dabei können dann auch jeder Teilnehmereinheit 14 für die Übertragung gemäß der zweiten Modulation M2 unterschiedliche Korrelationsfunktionen zugeordnet sein.

Der Leitrechner 11 kann die von den verschiedenen Kopplungseinrichtungen 17 erhaltenen Statusinformationen an das Asset-Management-System 21 übermitteln. Dieses kann die Buskommunikationsvorrichtung 10 entsprechend der erhaltenen und ausgewerteten Statusinformationen betreiben. Das Asset-Management-System 21 kann auf diese Weise auch mehrere mit ihr verbundene Buskommunikationsvorrichtungen 10 aufeinander abgestimmt abfragen und/oder koordinieren.

Bei dem hier beschriebenen Ausführungsbeispiel ist die Anzahl der vorhandenen Kopplungseinrichtungen 17 begrenzt. Diese Ausgestaltung der Buskommunikationsvorrichtung 10 dient als Mittel zur Begrenzung des über die Busleitung 12 fließenden Busleitungsstromes IB auf einen Maximalwert Imax. Da nicht alle Kopplungseinrichtungen 17 bzw. Teilnehmereinheiten 14 gleichzeitig ihre Stromaufnahme verringern ist der Busleitungsstrom IB in der Regel auch größer als ein Minimalwert Imin (Figur 4). Allerdings kann die Gleichstromaufnahme auch gleich Null oder sogar negativ sein, wenn fremdgespeiste Teilnehmer vorhanden sind. Die gleichzeitige Stromerhöhung von mehreren Teilnehmerströmen IT bzw. Kopplungseinrichtungsströmen IK ist begrenzt, so dass sichergestellt ist, dass der maximal über die Busleitung 12 fließende Busleitungsstrom IB von der Gleichspannungsquelle 13 zur Verfügung gestellt werden kann.

Die Erfindung betrifft eine Buskommunikationsvorrichtung 10 mit einer Busleitung 12, wenigstens einem an die Busleitung 12 angeschlossenen Kommunikationssteuergerät 11 sowie mehreren an die Busleitung 12 angeschlossenen Kopplungseinrichtungen 17, die zur Verbindung von jeweils wenigstens einer passiven Teilnehmereinheit 14 an die Busleitung dienen. Die Teilnehmereinheiten 14 können untereinander und/oder mit dem Kommunikationssteuergerät 11 gemäß einem fest vorgegebenen Busprotokoll bidirektional kommunizieren. Die Busleitung 12 dient üblicherweise zur Versorgung des Kommunikationssteuergeräts 11 sowie der Teilnehmereinheiten 14 mit elektrischer Energie für die Kommunikation. Hierfür ist eine elektrische Energiequelle, beispielsgemäß eine Gleichspannungsquelle 13, an die Busleitung 12 angeschlossen.

Findet keine Datenübertragung über die Busleitung 12 statt, nimmt jede Teilnehmereinheit 14 einen Ruhestrom IR auf. Durch Modulieren des von der Teilnehmereinheit 14 aufgenommenen Teilnehmerstromes IT auf vom Ruhestrom IR abweichende Werte können Daten über die Busleitung 12 übermittelt werden. Jede Teilnehmereinheit 14 weist eine Modulator-Demodulator-Einheit 20 auf, die den Teilnehmerstrom IT gemäß einer ersten Modulation M1 kann. Die erste Modulation M1 des Teilnehmerstromes IT erfolgt entsprechend dem Buskommunikationsprotokoll. Die Kopplungseinrichtungen 17 können den aufgenommenen Kopplungseinrichtungsstrom IK gemäß einer zweiten Modulation M2 modulieren. Die zweite Modulation M2 des Kopplungseinrichtungsstromes IK erfolgt außerhalb des Kommunikationsprotokolls völlig unabhängig von der Datenübertragung mittels der ersten Modulation M1. Der Gradient des Kopplungseinrichtungsstromes IK ist bei der zweiten Modulation M2 kleiner als ein Gradienten-Maximalwert und kleiner als der Gradient des Teilnehmerstromes IT bei der ersten Modulation M1. Über die zweite Modulation M2 wird ein zusätzlicher Kommunikationsweg über die Busleitung 12 ermöglicht, über den kleine Datenmengen wie Statusinformationen von einer Kopplungseinrichtung 17 an einen Empfänger, beispielsweise das Kommunikationssteuergerät 11 bzw. der Leitrechner und/oder ein Asset-Management-System 21 übertragen werden können.

Bezugszeichenliste:

| 10 | Buskommunikationsvorrichtung |
| 11 | Kommunikationssteuergerät |
| 12 | Busleitung |
| 12a | Ader |
| 12b | Ader |
| 13 | Gleichspannungsquelle |
| 14 | Teilnehmereinheit |
| 15 | Zwischenkreis |
| 15a | Induktivität |
| 16 | Abschlusseinheit |
| 17 | Kopplungseinrichtung |
| 18 | Signalfilter |
| 19 | erste Modulator-Demodulator-Einheit |
| 20 | zweite Modulator-Demodulator-Einheit |
| 21 | Asset-Management-System |
| 22 | Abzweigleitung |
| 25 | Spannungsversorgung |
| 26 | Diagnoseeinheit |
| 27 | Empfänger |
| 30 | Übertragungseinheit |
| 31 | Gleichspannungswandler |
| 32 | Kondensator |
| 33 | Übertragerspule |
| 34 | Ausgangsleitung |
| 35 | Strombegrenzungseinrichtung |
| 36 | Eingang |
| 37 | Ausgang |
| 38 | Messwiderstand |
| 39 | Steuertransistor |
| 40 | Operationsverstärker |
| 41 | Referenzspannungsquelle |
| 42 | Spannungssteuereinheit |
| 45 | Modulationsschaltung |
| 46 | Kurzschlussverbindung |
| f1 | erste charakteristische Frequenz |
| f2 | zweite charakteristische Frequenz |
| IB | Busleitungsstrom |
| IH | oberer Wert |
| IK | Kopplungseinrichtungsstrom |
| IL | unterer Wert |
| Imax | Maximalwert des Busleitungsstromes |
| Imin | Minimalwert des Busleitungsstromes |
| IR | Leitrechnerstrom |
| IT | Teilnehmerstrom |
| M1 | erste Modulation |
| M2 | zweite Modulation |
| Um | Messspannung |
| Uref | Referenzspannung |

**Patentansprüche**

1. Buskommunikationsvorrichtung (10) mit wenigstens einer an die Busleitung (12) angeschlossenen Kopplungseinrichtung (17) und mit wenigstens einer Teilnehmereinheit (14), wobei die zumindest eine Teilnehmereinheit (14) über jeweils eine Abzweigleitung (22) an wenigstens eine Kopplungseinrichtung (17) angeschlossen und über die Kopplungseinrichtung (17) an die Busleitung (12) angeschlossen ist,

und mit einer Energiequelle (25), die zur Versorgung der wenigstens einen Teilnehmereinheit (14) und/oder der wenigstens einen Kopplungseinrichtung (17) mit elektrischer Energie an die Busleitung (12) angeschlossen ist,

wobei ein über die Busleitung (12) in die wenigstens eine Teilnehmereinheit (14) fließender Teilnehmerstrom (IT) zur Datenübertragung moduliert wird, wobei die wenigstens eine Teilnehmereinheit (14) dazu eingerichtet ist, eine erste Modulation (M1) des Teilnehmerstromes (IT) entsprechend einem vorgegebenen Kommunikationsprotokoll durchzuführen, und wobei die wenigstens eine Kopplungseinrichtung (17) und/oder die wenigstens eine Teilnehmereinheit (14) dazu eingerichtet ist, wenigstens eine zweite Modulation (M2) des in die Kopplungseinrichtung (17) fließenden Kopplungseinrichtungsstromes (IK) durchzuführen, wobei die zweite Modulation (M2) außerhalb des Kommunikationsprotokolls der ersten Modulation (M1) unabhängig von der Datenübertragung mittels der ersten Modulation (M1) erfolgt.

2. Buskommunikationsvorrichtung nach Anspruch 1, **dadurch gekennzeichnet, dass** die zweite Modulation (M2) des Stromes (IT, IK) derart erfolgt, dass dadurch die erste Modulation (M1) unbeeinträchtigt ist.

3. Buskommunikationsvorrichtung nach Anspruch 2, **dadurch gekennzeichnet, dass** als Gradient (G) des Stromes (IK, IT) die Flankensteilheit der Stromänderung beim Umschalten zwischen einem oberen Wert (IH) und einem unteren Wert (IL) bezeichnet wird und dass der Gradient (G) des Stromes (IK, IT) für die zweite Modulation (M2) kleiner ist als für die erste Modulation (M1) des Stromes (IT).

4. Buskommunikationsvorrichtung nach einem der Ansprüche 1 bis 3, **dadurch gekennzeichnet, dass** als Gradient (G) des Stromes (IK, IT) die Flankensteilheit der Stromänderung beim Umschalten zwischen einem oberen Wert (IH) und einem unteren Wert (IL) bezeichnet wird und dass der Gradient (G) des Stromes (IK, IT) bei der zweiten Modulation (M2) auf einen Gradienten-Maximalwert begrenzt ist.

5. Buskommunikationsvorrichtung nach Anspruch 4, **dadurch gekennzeichnet, dass** der Gradient des Stromes (IT) bei der ersten Modulation (M1) oberhalb des Gradienten-Maximalwerts der zweiten Modulation (M2) liegt.

6. Buskommunikationsvorrichtung nach einem der vorhergehenden Ansprüche, **dadurch gekennzeichnet, dass** die erste Modulation (M1) den Strom (IT) gemäß der Manchester-Codierung moduliert.

7. Buskommunikationsvorrichtung nach einem der vorhergehenden Ansprüche, **dadurch gekennzeichnet, dass** die zweite Modulation (M2) des Stromes (IK, IT) anhand einer Korrelationsfunktion erfolgt.

8. Buskommunikationsvorrichtung nach einem der vorhergehenden Ansprüche, **dadurch gekennzeichnet, dass** die zweite Modulation (M2) des Stromes (IK, IT) anhand einer Frequenz- und/oder Amplitudenmodulation erfolgt.

9. Buskommunikationsvorrichtung nach einem der vorhergehenden Ansprüche, **dadurch gekennzeichnet, dass** über die zweite Modulation (M2) ein digitales Datenwort mit zumindest einem Bit übermittelt wird.

10. Buskommunikationsvorrichtung nach einem der vorhergehenden Ansprüche, **dadurch gekennzeichnet, dass** die wenigstens eine Kopplungseinrichtung (17) und/oder die wenigstens eine Teilnehmereinheit (14) für die Datenübertragung durch die zweite Modulation (M2) des Stromes (IT) nur als Sender dient.

11. Buskommunikationsvorrichtung nach einem der vorhergehenden Ansprüche, **dadurch gekennzeichnet, dass** mehrere Kopplungseinrichtungen (17) an die Busleitung (12) angeschlossen sind.

12. Buskommunikationsvorrichtung nach Anspruch 11, **dadurch gekennzeichnet, dass** jeder Kopplungseinrichtung (17) und/oder jeder Teilnehmereinheit (1) für die zweite Modulation (M2) eine charakteristische Korrelationsfunktion oder eine oder mehrere charakteristische Frequenzen (f1, f2) zugeordnet sind, die sich von der charakteristischen Korrelationsfunktion oder der oder den charakteristischen Frequenzen (f1, f2) anderer Kopplungseinrichtungen (17) und/oder Teilnehmereinheiten (174) unterscheidet.

13. Buskommunikationsvorrichtung nach einem der vorhergehenden Ansprüche, **dadurch gekennzeichnet, dass** ein Kommunikationssteuergerät (11) zur Steuerung der Kommunikation über die Busleitung (12) gemäß dem Kommunikationsprotokoll an die Busleitung (12) angeschlossen ist und/oder dass ein Asset-Management-System (21) zur Steuerung und/oder Überwachung der Buskommunikationsvorrichtung (10) vorhanden ist.

14. Buskommunikationsvorrichtung nach einem der vorhergehenden Ansprüche,
**dadurch gekennzeichnet, dass** eine Diagnoseeinheit (26) vorhanden ist, die dazu eingerichtet ist, eine Bitübertragungsschicht der Buskommunikationsvorrichtung (10) zu diagnostizieren.

15. Buskommunikationsvorrichtung nach Anspruch 13 und 14,
**dadurch gekennzeichnet, dass** die Diagnoseeinheit (26) als Empfänger (27) für die korrelierten bzw. modulierten Stromsignale gemäß der zweiten Modulation (M2) eingerichtet ist und dass der Empfänger (27) die empfangenen und über eine entsprechende Korrelationsfunktion oder Demodulation erhaltenen Informationen an das Kommunikationssteuergerät (11) und/oder an das Asset-Management-System (21) übermittelt.

**Claims**

1. Bus communication device (10)
with at least one coupling device (17) connected to the bus line (12) and with at least one subscriber unit (14), wherein the at least one subscriber unit (14) is connected via a respective branch line (22) to at least one coupling device (17) and is connected via the coupling device (17) to the bus line (12),
and with an energy source (25), which is connected to the bus line (12) to supply the at least one subscriber unit (14) and/or the at least one coupling device (17) with electrical energy,
wherein a subscriber current (IT) flowing into the at least one subscriber unit (14) via the bus line (12) is modulated for data transmission,
wherein the at least one subscriber unit (14) is arranged to perform a first modulation (M1) of the subscriber current (IT) in accordance with a preset communication protocol,
and wherein the at least one coupling device (17) and/or the at least one subscriber unit (14) is arranged to perform at least one second modulation (M2) of the coupling device current (IK) flowing into the coupling device (17), wherein the second modulation (M2) occurs outside the communication protocol of the first modulation (M1) independently of the data transmission by means of the first modulation (M1).

2. Bus communication device according to claim 1, **characterised in that** the second modulation (M2) of the current (IT, IK) occurs in such a manner that the first modulation (M1) is unimpaired by it.

3. Bus communication device according to claim 2, **characterised in that** the edge gradient of the change in current during switchover between an upper value (IH) and a lower value (IL) is designated as gradient (G) of the current (IK, IT), and that the gradient (G) of the current (IK, IT) is smaller for the second modulation (M2) than for the first modulation (M1) of the current (IT).

4. Bus communication device according to one of claims 1 to 3, **characterised in that** the edge gradient of the change in current during switchover between an upper value (IH) and a lower value (IL) is designated as gradient (G) of the current (IK, IT), and that in the case of the second modulation (M2) the gradient (G) of the current (IK, IT) is restricted to a maximum gradient value.

5. Bus communication device according to claim 4, **characterised in that** that in the case of the first modulation (M1) the gradient of the current (IT) lies above the maximum gradient value of the second modulation (M2).

6. Bus communication device according to one of the preceding claims, **characterised in that** the first modulation (M1) modulates the current (IT) in accordance with the Manchester encoding.

7. Bus communication device according to one of the preceding claims, **characterised in that** the second modulation (M2) of the current (IK, IT) is performed on the basis of a correlation function.

8. Bus communication device according to one of the preceding claims, **characterised in that** the second modulation (M2) of the current (IK, IT) is performed on the basis of a frequency and/or amplitude modulation.

9. Bus communication device according to one of the preceding claims, **characterised in that** a digital data word with at least one bit is transmitted by means of the second modulation (M2).

10. Bus communication device according to one of the preceding claims, **characterised in that** for the data transmission by means of the second modulation (M2) of the current (IT) the at least one coupling device (17) and/or the at least one subscriber unit (14) serve(s) only as transmitter.

11. Bus communication device according to one of the preceding claims, **characterised in that** multiple coupling devices (17) are connected to the bus line (12).

12. Bus communication device according to claim 11, **characterised in that** for the second modulation (M2) each coupling device (17) and/or each subscriber unit (1) is/are assigned a characteristic correlation function or one or more characteristic frequencies (f1, f2), which differ from the characteristic correlation function or the characteristic frequency or frequencies (f1, f2) of other coupling devices (17) and/or subscriber units (174).

13. Bus communication device according to one of the preceding claims, **characterised in that** a communication control device (11) is connected to the bus line (12) to control the communication via the bus line (12) in accordance with the communication protocol and/or that an asset management system (21) is provided for control and/or monitoring of the bus communication device (10).

14. Bus communication device according to one of the preceding claims, **characterised in that** a diagnostic unit (26) is provided, which is arranged to diagnose a bit transmission layer of the bus communication device (10).

15. Bus communication device according to claim 13 and 14, **characterised in that** the diagnostic unit (26) is arranged as receiver (27) for the correlated or modulated current signals according to the second modulation (M2), and that the receiver (27) transmits the received information and information obtained by means of a corresponding correlation function or demodulation to the communication control device (11) and/or to the asset management system (21).

**Revendications**

1. Dispositif de communication par bus (10), comprenant au moins un dispositif de couplage (17), connecté a la ligne omnibus (12), et comprenant au moins une unité utilisatrice (14), l'unité utilisatrice (14), au nombre d'au moins une, étant connectée respectivement par l'intermédiaire d'une ligne de dérivation (22) à au moins un dispositif de couplage (17) et, par l'intermédiaire du dispositif de couplage (17), à la ligne omnibus (12),
et comprenant une source d'énergie (25) qui est connectée à la ligne omnibus (12) en vue de l'alimentation en énergie électrique de l'unité utilisatrice (14), au nombre d'au moins une, et/ou du dispositif de couplage (17), au nombre d'au moins un,
sachant qu'un courant utilisateur (IT) qui entre dans l'unité utilisatrice (14), au nombre d'au moins une, par l'intermédiaire de la ligne omnibus (12), est modulé en vue de la transmission de données,
sachant que l'unité utilisatrice (14), au nombre d'au moins une, est conçue pour effectuer une première modulation (M1) du courant utilisateur (IT), en fonction d'un protocole de communication prédéterminé, et sachant que le dispositif de couplage (17), au nombre d'au moins un, et/ou l'unité utilisatrice (14), au nombre d'au moins une, sont conçus pour effectuer au moins une deuxième modulation (M2) du courant de dispositif de couplage (IK) entrant dans le dispositif de couplage (17), la deuxième modulation (M2) étant réalisée en dehors du protocole de communication de la première modulation (M1), indépendamment de la transmission de données au moyen de la première modulation (M1).

2. Dispositif de communication par bus selon la revendication 1, **caractérisé en ce que** la deuxième modulation (M2) du courant (IT, IK) est réalisée de telle manière que la première modulation (M1) ne soit pas modifiée.

3. Dispositif de communication par bus selon la revendication 2, **caractérisé en ce que** l'on désigne comme gradient (G) du courant (IK, IT), la pente de signal de la variation de courant lors de la commutation entre une valeur supérieure (IH) et une valeur inférieure (IL), et **en ce que** le gradient (G) du courant (IK, IT) pour la deuxième modulation (M2) est plus petit que pour la première modulation (M1) du courant (IT).

4. Dispositif de communication par bus selon l'une des revendications 1 à 3, **caractérisé en ce que** l'on désigne comme gradient (G) du courant (IK, IT), la pente de signal de la variation de courant lors de la commutation entre une valeur supérieure (IH) et une valeur inférieure (IL), et **en ce que** le gradient (G) du courant (IK, IT) pour la deuxième modulation (M2) est limité à une valeur maximale de gradient.

5. Dispositif de communication par bus selon la revendication 4, **caractérisé en ce que** le gradient du courant (IT) pour la première modulation (M1) se situe au-dessus de la valeur maximale de gradient de la deuxième modulation (M2).

6. Dispositif de communication par bus selon l'une des revendications précédentes, **caractérisé en ce que** la première modulation (M1) module le courant (IT) selon le codage Manchester.

7. Dispositif de communication par bus selon l'une des revendications précédentes, **caractérisé en ce que** la deuxième modulation (M2) du courant (IK, IT) est effectuée à l'aide d'une fonction de corrélation.

8. Dispositif de communication par bus selon l'une des revendications précédentes, **caractérisé en ce que** la deuxième modulation (M2) du courant (IK, IT) est effectuée à l'aide d'une modulation de fréquence et/ou d'amplitude.

9. Dispositif de communication par bus selon l'une des revendications précédentes, **caractérisé en ce que** l'on transmet, par l'intermédiaire de la deuxième modulation (M2), un mot de donnée numérique comportant au moins un bit.

10. Dispositif de communication par bus selon l'une des revendications précédentes, **caractérisé en ce que** le dispositif de couplage (17), au nombre d'au moins un, et/ou l'unité utilisatrice (14), au nombre d'au moins une, sert uniquement comme émetteur pour la transmission de données par la deuxième modulation (M2) du courant (IT).

11. Dispositif de communication par bus selon l'une des revendications précédentes, **caractérisé en ce que** plusieurs dispositifs de couplage (17) sont connectés à la ligne omnibus (12).

12. Dispositif de communication par bus selon la revendication 11, **caractérisé en ce que** sont associées à chaque dispositif de couplage (17) et/ou à chaque unité utilisatrice (1), pour la deuxième modulation (M2), une fonction de corrélation caractéristique ou une ou plusieurs fréquences caractéristiques (f1, f2), qui se distinguent de la fonction de corrélation caractéristique ou de la ou des fréquences caractéristiques (f1, f2) d'autres dispositifs de couplage (17) et/ou d'autres unités utilisatrices (174).

13. Dispositif de communication par bus selon l'une des revendications précédentes, **caractérisé en ce qu'**un appareil de commande de communication (11), destiné à commander la communication via la ligne omnibus (12), conformément au protocole de communication, est connecté à la ligne omnibus (12), et/ou **en ce qu'**un système de gestion d'actifs (21) est prévu pour commander et/ou surveiller le dispositif de communication par bus (10).

14. Dispositif de communication par bus selon l'une des revendications précédentes, **caractérisé en ce qu'**il est prévu une unité de diagnostic (26) qui est conçue pour diagnostiquer une couche de transmission de bits du dispositif de communication par bus (10).

15. Dispositif de communication par bus selon les revendications 13 et 14, **caractérisé en ce que** l'unité de diagnostic (26) est conçue comme récepteur (27) pour les signaux de courant corrélés ou modulés selon la deuxième modulation (M2), et **en ce que** le récepteur (27) transmet à l'appareil de commande de communication (11) et/ou au système de gestion d'actifs (21), les informations reçues et obtenues par l'intermédiaire d'une fonction de corrélation ou d'une démodulation correspondantes.

Fig.1

EP 2 823 602 B1

EP 2 823 602 B1

Fig.2

Fig.3

Fig.4

EP 2 823 602 B1

Fig.5

EP 2 823 602 B1

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010037262 A1
- WO 2009063213 A1
- WO 2012038472 A1
- WO 2011007142 A1
- EP 2073435 A1